# EUROPEAN PATENT APPLICATION

(11) **EP 3 836 431 A1**
(43) Date of publication of application: **16.06.2021**
(21) Application number: 19847603.8
(22) Date of filing: 05.08.2019
(51) Int. Cl.: H04B 10/291, H01S 3/10, H02G 15/14

(54) **UNDERSEA REPEATER AND LIGHT-AMPLIFYING METHOD**

(30) Priority: 07.08.2018 JP 2018148478
(71) Applicant: NEC Corporation, 108-8001 Tokyo (JP)
(72) Inventor: MIKAMI Satoshi, Tokyo 108-8001 (JP)
(74) Representative: Reeve, Nicholas Edward
(86) International application number: PCT/JP2019/030627
(87) International publication number: WO 2020/031929

(57) **Abstract**

[Problem] To provide an undersea repeater that is capable of reducing power consumption while being equipped with a plurality of subunits.

[Solution] This undersea repeater is configured so as to comprise a case 1, a plurality of light-amplifying units 2, and an excitation light source unit 3. The case 1 has housed therein a plurality of subunits. The light-amplifying units 2 are provided as subunits and each have a light amplifier that amplifies, on the basis of an excitation light, optical power of an inputted signal beam and outputs the same. The excitation light source unit 3 is provided as a subunit, generates excitation light, and outputs, to the respective light-amplifying units 2, beams obtained by splitting the excitation light.

## Description

### [Technical Field]

The present invention relates to an undersea repeater, and particularly, relates to an amplification technique of optical power of signal light.

### [Background Art]

In an undersea cable system, an undersea repeater that performs amplification or the like of optical power of signal light is constituted of an electronic component such as an excitation light source and a control circuit thereof, and an optical component such as an optical amplifier and an optical fiber. In the undersea cable system, electric power is supplied from land to a large number of undersea repeaters via a feed line inside an undersea cable, and therefore, electric power consumption of each undersea repeater is preferably suppressed.

An undersea repeater has therein a plurality of subunits. In the undersea repeater, an electronic component and an optical component are housed in each subunit. As such an undersea repeater having therein a subunit, a configuration as in PTL 1, for example, is disclosed. An undersea repeater in PTL 1 includes a plurality of stacked subunits inside a pressure vessel. PTL 1 suggests a structure that facilitates replacement of a light source included as one of the subunits. PTL 2 suggests an optical amplifier that performs amplification of optical power of signal light.

### [Citation List]

### [Patent Literature]

[PTL 1] Japanese Unexamined Patent Application Publication No. 2001-320826
[PTL 2] Japanese Unexamined Patent Application Publication No. 2013-123205

### [Summary of Invention]

### [Technical Problem]

However, a technique in PTL 1 is not satisfactory in the following point. An undersea cable system is constituted of a plurality of optical fibers. In an undersea repeater in such an undersea cable system, optical amplifiers or the like that each amplifies optical power of signal light transmitted through each optical fiber are installed as subunits. When an excitation light source being associated with each of a plurality of the optical amplifiers and a control circuit of the light source are installed, electric power consumption in the undersea repeater increases. Thus, an undersea repeater in PTL 1 may increase electric power consumption when including a plurality of optical amplifiers or the like as subunits. Similarly, PTL 2 is not able to sufficiently suppress electric power consumption when including a plurality of optical amplifiers or the like.

In order to solve the problem described above, an object of the present invention is to provide an undersea repeater that includes a plurality of subunits, and can still reduce electric power consumption.

### [Solution to Problem]

In order to solve the problem described above, an undersea repeater according to the present invention includes a case, a plurality of optical amplification units, and an excitation light source unit. The case houses therein a plurality of subunits. The optical amplification unit is included as a subunit and has an optical amplifier that amplifies, based on excitation light, optical power of input signal light and outputs the amplified light. The excitation light source unit is included as a subunit, generates the excitation light, and outputs the split excitation light to each of the optical amplification units.

An optical amplification method according to the present invention is an optical amplification method in an undersea repeater including, as subunits inside a case, a plurality of optical amplification units each having an optical amplifier, and an excitation light source unit that outputs excitation light, and the optical amplification method includes, in the excitation light source unit, generating excitation light, and outputting split excitation light to each of the optical amplification units. The optical amplification method according to the present invention includes, in the optical amplifier of each of the optical amplification units, amplifying, based on the excitation light, optical power of input signal light and outputting the amplified light.

### [Advantageous Effects of Invention]

The present invention is able to reduce electric power consumption while including a plurality of subunits.

### [Brief Description of Drawings]

Fig. 1 is a diagram illustrating an overview of a configuration according to a first example embodiment of the present invention.
Fig. 2 is a diagram illustrating an overview of a configuration according to a second example embodiment of the present invention.
Fig. 3 is a diagram illustrating a configuration example of an undersea repeater of a configuration compared with the present invention.
Fig. 4 is a diagram illustrating an overview of a configuration according to a third example embodiment of the present invention.
Fig. 5 is a diagram illustrating an overview of a configuration according to a fourth example embodiment of the present invention.
Fig. 6 is a diagram illustrating an overview of a configuration according to a fifth example embodiment of the present invention.
Fig. 7 is a diagram illustrating a configuration of an undersea cable system using an undersea repeater according to each example embodiment of the present invention.

### [Example Embodiment]

### (First Example Embodiment)

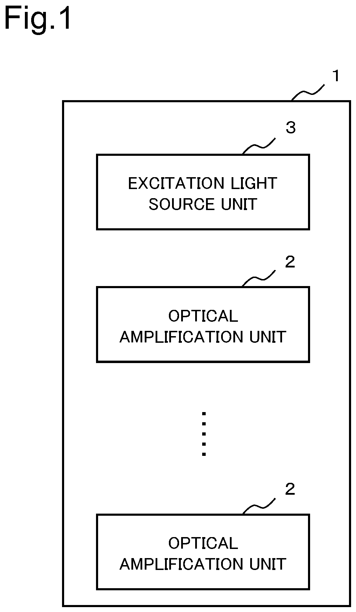

A first example embodiment of the present invention is described in detail with reference to the drawings. Fig. 1 illustrates an overview of a configuration of an undersea repeater according to the present example embodiment. The undersea repeater according to the present example embodiment includes a case 1, a plurality of optical amplification units 2, and an excitation light source unit 3. The case 1 has housed therein a plurality of subunits. The optical amplification unit 2 is included as a subunit, and has an optical amplifier that amplifies, based on excitation light, optical power of input signal light and outputs the amplified light. The excitation light source unit 3 is included as a subunit, generates the excitation light, and outputs the split excitation light to each of the optical amplification units 2.

The undersea repeater according to the present example embodiment generates excitation light in the excitation light source unit 3, outputs the split excitation light to a plurality of the optical amplification units 2, and performs amplification of optical power of signal light in the optical amplification unit 2. In other words, the undersea repeater according to the present example embodiment inputs excitation light to a plurality of the optical amplification units 2 from the common excitation light source unit 3. Thus, the undersea repeater according to the present example embodiment does not need to include the excitation light source unit 3 for each of the optical amplification units 2, can suppress the number of the excitation light source units 3, and therefore, can reduce electric power consumption.

### (Second Example Embodiment)

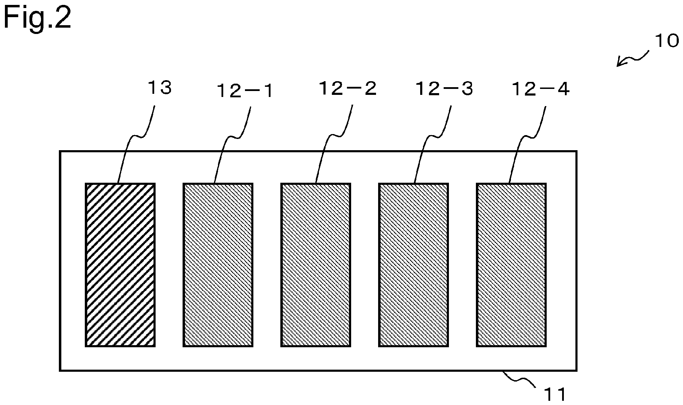

A second example embodiment of the present invention is described in detail with reference to the drawings. Fig. 2 illustrates an overview of a configuration of an undersea repeater 10 according to the present example embodiment. The undersea repeater 10 according to the present example embodiment is a device that performs amplification of optical power of signal light transmitted through an optical fiber in an undersea cable system.

The undersea repeater 10 according to the present example embodiment includes a case 11, an optical amplifier 12, and an excitation light source unit 13. The undersea repeater 10 according to the present example embodiment includes, as the optical amplifier 12, four optical amplifiers being an optical amplifier 12-1, an optical amplifier 12-2, an optical amplifier 12-3, and an optical amplifier 12-4. The number of the optical amplifiers 12 may be other than four.

The case 11 is a cylindrical vessel having therein a space housing a plurality of subunits. The case 11 has pressure resistance, water resistance, corrosion resistance, and the like, and is formed of a material that is able to be placed undersea for a long period.

The optical amplifier 12 is an amplifier that amplifies, based on excitation light, optical power of a signal light. The optical amplifier 12 according to the present example embodiment is configured by use of an erbium doped fiber amplifier (EDFA). The optical amplifier 12 amplifies optical power of input signal light, based on excitation light input from the excitation light source unit 13 in such a way as to produce, for example, forward excitation, and outputs the amplified light. The optical amplifier 12 according to the present example embodiment is designed in such a way that amplification efficiency and uniformity of optical power of signal light in a C-band become high. The optical amplifier is equivalent to the optical amplification unit 2 according to the first example embodiment.

The excitation light source unit 13 generates excitation light, and outputs the generated excitation light to each of the optical amplifiers 12. The excitation light source unit 13 includes a semiconductor laser and an optical coupler. The excitation light source unit 13 according to the present example embodiment includes a semiconductor laser that outputs continuous light on a predetermined wavelength. The predetermined wavelength of the excitation light output by the excitation light source unit 13 can be set as, for example, 0.98 µm.

The excitation light source unit 13 according to the present example embodiment splits light output from the semiconductor laser into four portions with the optical coupler, and outputs each portion to each of the optical amplifiers 12. The semiconductor laser of the excitation light source unit 13 operates based on electricity supplied via a feed line inside an undersea cable connected to the undersea repeater 10.

An operation of the undersea repeater 10 according to the present example embodiment is described. The semiconductor laser of the excitation light source unit 13 of the undersea repeater 10 generates excitation light and outputs the excitation light to the optical coupler. The optical coupler splits the input excitation light into four portions, and outputs each portion to each of the optical amplifiers 12-1, 12-2, 12-3, and 12-4. The excitation light source unit 13 according to the present example embodiment splits the excitation light in such a way that optical power of excitation light input to each of the optical amplifiers 12 becomes equal.

Signal light input to the undersea repeater 10 via the undersea cable is input to each of the optical amplifiers 12 being associated with an optical fiber through which the signal light is transmitted.

When the signal light is input to each of the optical amplifiers 12, optical power of the signal light is amplified based on excitation light input from the excitation light source unit 13. The signal light of which optical power is amplified is output to an optical fiber connected to each of the optical amplifiers 12, and transmitted through the undersea cable.

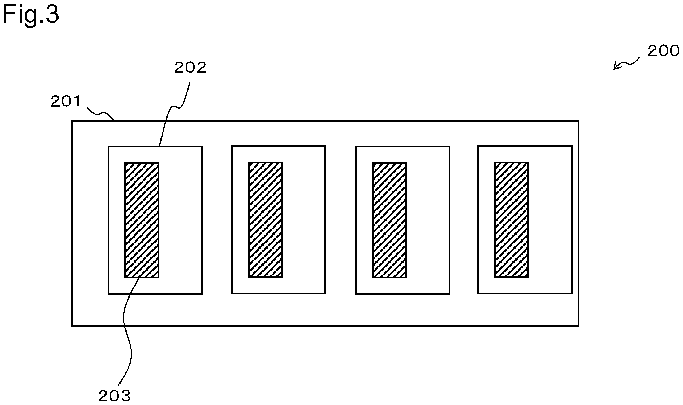

Fig. 3 schematically illustrates an undersea repeater 200 of a configuration compared with the undersea repeater 10 according to the present example embodiment. The undersea repeater 200 illustrated in Fig. 3 includes a case 201, four optical amplifiers 202, and an excitation light source unit 203 being associated with each of the optical amplifiers 202. In the undersea repeater 200 in Fig. 3, the excitation light source unit 203 is included for each of the optical amplifiers 202, and therefore, the same numbers of light sources and control circuits as the optical amplifiers 202 are needed. Thus, in the undersea repeater 200 illustrated in Fig. 3, electric power consumption needed for operations of the light sources and the control circuits becomes great. On the other hand, the undersea repeater 10 according to the present example embodiment includes only one excitation light source unit 13 for four optical amplifiers 12. Thus, in the undersea repeater 10 according to the present example embodiment, electric power consumption needed for operations of the light sources and the control circuits can be suppressed.

The optical amplifier 12 and the excitation light source unit 13 of the undersea repeater 10 according to the present example embodiment are optimized in such a way as to amplify optical power of signal light in a C-band, but may be optimized for signal light in another wavelength band such as an L-band or a C+L-band. The excitation light source unit 13 according to the present example embodiment splits excitation light in such a way that optical power of each excitation light becomes equal, but optical power of input excitation light may differ for each of the optical amplifiers 12. In a case of such a configuration, splitting is performed by use of, for example, an optical coupler of which split ratio is set based on a ratio of optical power of excitation light after split. A split ratio of optical power of excitation light may be variable. When a split ratio of optical power is variable, splitting of excitation light is performed by use of, for example, wavelength selective switching (WSS).

The undersea repeater 10 according to the present example embodiment supplies excitation light to a plurality of the optical amplifiers 12 from the common excitation light source unit 13. Thus, in the undersea repeater 10 according to the present example embodiment, a semiconductor laser of an excitation light source and a control circuit of the excitation light source do not need to be included for each of the optical amplifiers 12, and therefore, downsizing and electric power saving of each function module can be performed. In the undersea repeater 10 according to the present example embodiment, it becomes possible to downsize the undersea repeater 10 and increase a function module housed inside, by downsizing each function module.

### (Third Example Embodiment)

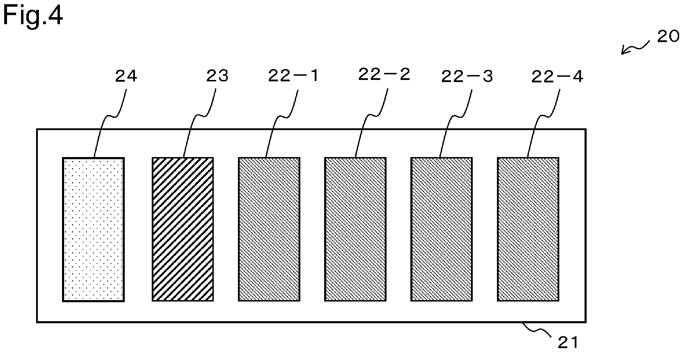

A third example embodiment of the present invention is described in detail with reference to the drawings. Fig. 4 illustrates an overview of a configuration of an undersea repeater 20 according to the present example embodiment. The undersea repeater 20 according to the present example embodiment is a device that performs amplification of optical power of signal light transmitted through an optical fiber in an undersea cable system as in the second example embodiment. The undersea repeater 20 according to the present example embodiment is characterized in that a subunit having a surge protection circuit is provided near an excitation light source unit.

The undersea repeater 20 according to the present example embodiment includes a case 21, an optical amplifier 22, an excitation light source unit 23, and a surge protection circuit 24. The undersea repeater 20 according to the present example embodiment includes, as the optical amplifier 22, four optical amplifiers being an optical amplifier 22-1, an optical amplifier 22-2, an optical amplifier 22-3, and an optical amplifier 22-4. The number of the optical amplifiers 22 may be other than four.

Configurations and functions of the case 21, the optical amplifier 22, and the excitation light source unit 23 according to the present example embodiment are similar to those of the parts having the same names according to the second example embodiment. The optical amplifier 22 may be optimized in such a way as to amplify optical power of signal light in a C-band, or may be optimized for signal light in another wavelength band such as an L-band or a C+L-band. A band to be a target for optimization may differ for each of the optical amplifiers 22. When the optical amplifiers 22 targeted for different wavelength bands are mixed or when the optical amplifier 22 that amplifies a C+L-band is used as well, each of the optical amplifiers 22 can have a configuration in which excitation light output from the common excitation light source unit 23 is input to each of the optical amplifiers 22 regardless of a wavelength band to be targeted.

The surge protection circuit 24 is included as a subunit that prevents entry of a surge into the excitation light source unit 23. Electricity supplied from a feed line of an undersea cable is supplied to each of a semiconductor laser and a control circuit of the excitation light source unit 23 via the surge protection circuit 24. When current supplied from the undersea cable is brought into a state of overcurrent, the surge protection circuit 24 cuts off current to the excitation light source unit 23. The surge protection circuit 24 according to the present example embodiment is included in a subunit being adjacent to the excitation light source unit 23. The surge protection circuit 24 may be included in any place other than the adjacent subunit as long as the surge protection circuit 24 is near the excitation light source unit 23.

An operation of the undersea repeater 20 according to the present example embodiment is described. The semiconductor laser of the excitation light source unit 23 of the undersea repeater 20 generates excitation light, based on control of the control circuit, and outputs the excitation light to an optical coupler. The semiconductor laser and the control circuit operate based on electricity supplied from a feed line of an undersea cable via the surge protection circuit 24. When current supplied from the undersea cable is brought into a state of overcurrent, the surge protection circuit 24 cuts off current to the excitation light source unit 23. When excitation light is input, the optical coupler splits input excitation light into four portions, and outputs each portion to each of the optical amplifiers 22-1, 22-2, 22-3, and 22-4.

Signal light input to the undersea repeater 20 via the undersea cable is input to each of the optical amplifiers 22 being associated with an optical fiber through which the signal light is transmitted. When the signal light is input to each of the optical amplifiers 22, optical power of the signal light is amplified based on excitation light input from the excitation light source unit 23. The signal light of which optical power is amplified is output to an optical fiber connected to each of the optical amplifiers 22, and transmitted through the undersea cable.

The undersea repeater 20 according to the present example embodiment has an advantageous effect similar to that of the undersea repeater 10 according to the second example embodiment. In the undersea repeater 20 according to the present example embodiment, a supply destination of electricity is only the excitation light source unit 23, and the surge protection circuit 24 and the excitation light source unit 23 are adjacent to each other, and therefore, routing of electricity wiring becomes less, which makes manufacture easy and can suppress a fault due to breaking, a connection failure, or the like. The excitation light source unit 23 can be protected from overcurrent by using the undersea repeater 20 according to the present example embodiment, and therefore, reliability improves.

### (Fourth Example Embodiment)

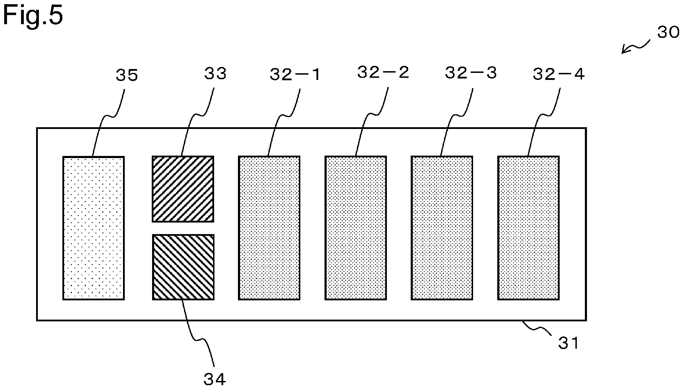

A fourth example embodiment of the present invention is described in detail with reference to the drawings. Fig. 5 illustrates an overview of a configuration of an undersea repeater 30 according to the present example embodiment. The undersea repeater 30 according to the present example embodiment is a device that has a surge protection circuit, and performs amplification of optical power of signal light transmitted through an optical fiber, in an undersea cable system as in the third example embodiment. The undersea repeater 30 according to the present example embodiment is characterized by amplifying optical power of signal light in a C+L-band, and including a common excitation light source unit for each wavelength band of signal light.

The undersea repeater 30 according to the present example embodiment includes a case 31, an optical amplifier 32, a first excitation light source unit 33, a second excitation light source unit 34, and a surge protection circuit 35. The undersea repeater 30 according to the present example embodiment includes, as the optical amplifier 32, four optical amplifiers being an optical amplifier 32-1, an optical amplifier 32-2, an optical amplifier 32-3, and an optical amplifier 32-4. The number of the optical amplifiers 32 may be other than four.

A configuration and a function of the case 31 according to the present example embodiment are similar to those of the case 11 according to the second example embodiment.

The optical amplifier 32 is an amplifier that amplifies optical power of signal light, based on excitation light. The optical amplifier 32 according to the present example embodiment is configured by use of an EDFA. The optical amplifier 32 amplifies, based on excitation light input from the first excitation light source unit 33 and the second excitation light source unit 34, optical power of input signal light, and outputs the amplified light. The optical amplifier 32 according to the present example embodiment is designed in such a way that amplification efficiency and uniformity of signal light in a C-band and an L-band become high.

The first excitation light source unit 33 generates excitation light for amplifying optical power of signal light in a C-band, and outputs the generated excitation light to each of the optical amplifiers 32. The first excitation light source unit 33 includes a semiconductor laser, a control circuit that controls the semiconductor laser, and an optical coupler. The first excitation light source unit 33 according to the present example embodiment includes a semiconductor laser that outputs continuous light on a predetermined wavelength. The predetermined wavelength is set as, for example, 0.98 µm. The first excitation light source unit 33 according to the present example embodiment splits, into four portions with the optical coupler, light output from the semiconductor laser, and outputs each portion to each of the optical amplifiers 32. The semiconductor laser of the first excitation light source unit 33 operates based on electricity supplied, via the surge protection circuit 35, from a feed line inside an undersea cable connected to the undersea repeater 30.

The second excitation light source unit 34 generates excitation light for amplifying optical power of signal light in an L-band, and outputs the generated excitation light to each of the optical amplifiers 32. The second excitation light source unit 34 includes a semiconductor laser, a control circuit that controls the semiconductor laser, and an optical coupler. The second excitation light source unit 34 according to the present example embodiment includes a semiconductor laser that outputs continuous light on a predetermined wavelength. The second excitation light source unit 34 according to the present example embodiment splits, into four portions with the optical coupler, light output from the semiconductor laser, and outputs each portion to each of the optical amplifiers 32. The semiconductor laser of the first excitation light source unit 33 operates based on electricity supplied, via the surge protection circuit 35, from a feed line inside an undersea cable connected to the undersea repeater 30.

The surge protection circuit 35 is included as a subunit that prevents entry of a surge into the first excitation light source unit 33 and the second excitation light source unit 34. Electricity supplied from a feed line of an undersea cable is supplied to each of a semiconductor laser and a control circuit of each of the first excitation light source unit 33 and the second excitation light source unit 34 via the surge protection circuit 35. When current supplied from the undersea cable is brought into a state of overcurrent, the surge protection circuit 35 cuts off current to the first excitation light source unit 33 and the second excitation light source unit 34.

The surge protection circuit 35 according to the present example embodiment is included as a subunit being adjacent to the first excitation light source unit 33 and the second excitation light source unit 34. The surge protection circuit 35 may be included between the first excitation light source unit 33 and the second excitation light source unit 34. The surge protection circuit 35 may not be a subunit being adjacent to the first excitation light source unit 33 and the second excitation light source unit 34 as long as the surge protection circuit 35 is near the first excitation light source unit 33 and the second excitation light source unit 34.

An operation of the undersea repeater 30 according to the present example embodiment is described. The semiconductor laser of the first excitation light source unit 33 of the undersea repeater 30 generates excitation light that amplifies optical power of signal light in a C-band, based on electricity supplied from an electricity line of an undersea cable via the surge protection circuit 35, and outputs the generated excitation light to the optical coupler. The optical coupler splits the input excitation light into four portions, and outputs each portion to each of the optical amplifiers 32-1, 32-2, 32-3, and 32-4. The first excitation light source unit 33 according to the present example embodiment splits the excitation light in such a way that optical power of excitation light input to each of the optical amplifiers 32 becomes equal.

The semiconductor laser of the second excitation light source unit 34 generates excitation light that amplifies optical power of signal light in an L-band, based on electricity supplied from an electricity line of an undersea cable via the surge protection circuit 35, and outputs the generated excitation light to the optical coupler. The optical coupler splits the input excitation light into four portions, and outputs each portion to each of the optical amplifiers 32-1, 32-2, 32-3, and 32-4. The second excitation light source unit 34 according to the present example embodiment splits the excitation light in such a way that optical power of excitation light input to each of the optical amplifiers 32 becomes equal.

Each of the excitation light source units according to the present example embodiment splits the excitation light in such a way that optical power of each excitation light becomes equal, but the first excitation light source unit 33 and the second excitation light source unit 34 may differ in split ratio. Optical power of input excitation light may differ for each optical amplifier. In a case of differing split ratios, splitting is performed by use of, for example, an optical coupler of which split ratio is set based on a ratio of optical power of excitation light after splitting. A split ratio of optical power of excitation light may be variable. When a split ratio of optical power is variable, splitting of excitation light is performed by use of, for example, wavelength selective switching (WSS).

When current supplied from the undersea cable is brought into a state of overcurrent, the surge protection circuit 35 cuts off current to the first excitation light source unit 33 and the second excitation light source unit 34.

Signal light input to the undersea repeater 30 via the undersea cable is input to each of the optical amplifiers 32 being associated with an optical fiber through which the signal light is transmitted.

When the signal light is input to each of the optical amplifiers 32, optical power of the signal light in each of a C-band and an L-band is amplified based on excitation light input from each of the first excitation light source unit 33 and the second excitation light source unit 34. The signal light of which optical power is amplified is output to an optical fiber connected to each of the optical amplifiers 32, and transmitted through the undersea cable.

When light sources being associated with excitation light on a plurality of wavelengths are included as in the undersea repeater 30 according to the present example embodiment as well, downsizing and electric power saving of a device can be performed by using a common excitation light source for each wavelength.

### (Fifth Example Embodiment)

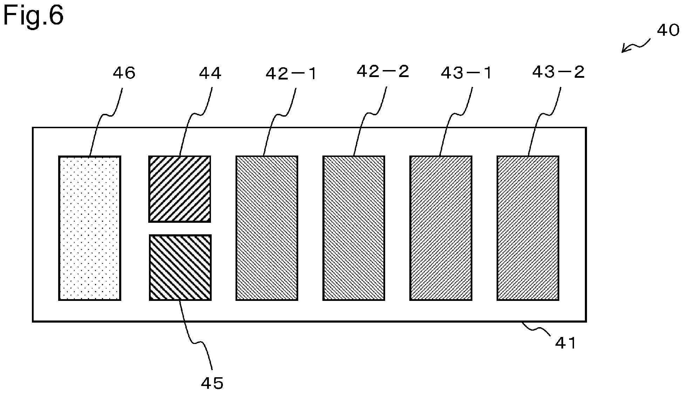

A fifth example embodiment of the present invention is described in detail with reference to the drawings. Fig. 6 illustrates an overview of a configuration of an undersea repeater 40 according to the present example embodiment. The undersea repeater 40 according to the present example embodiment is a device that has a surge protection circuit, and performs amplification of optical power of signal light transmitted through an optical fiber, by use of a common excitation light source unit for each wavelength band, in an undersea cable system as in the fourth example embodiment. The undersea repeater 30 according to the present example embodiment is characterized by including a common excitation light source unit for each wavelength band of signal light.

The undersea repeater 40 according to the present example embodiment includes a case 41, a first optical amplifier 42, a second optical amplifier 43, a first excitation light source unit 44, a second excitation light source unit 45, and a surge protection circuit 46.

The undersea repeater 40 according to the present example embodiment includes, as the first optical amplifier 42, two optical amplifiers being a first optical amplifier 42-1 and a first optical amplifier 42-2. The undersea repeater 40 according to the present example embodiment includes, as the second optical amplifier 43, two optical amplifiers being a second optical amplifier 43-1 and a second optical amplifier 43-2. Each of the numbers of the first optical amplifiers 42 and second optical amplifiers 43 may be other than two.

Configurations and functions of the case 41, the first excitation light source unit 44, the second excitation light source unit 45, and the surge protection circuit 46 according to the present example embodiment are similar to those of the parts having the same names according to the fourth example embodiment.

The first excitation light source unit 44 generates excitation light for amplifying optical power of signal light in a C-band, and outputs the generated excitation light to each of the first optical amplifiers 42. The first excitation light source unit 44 includes a semiconductor laser, a control circuit that controls the semiconductor laser, and an optical coupler. The first excitation light source unit 44 according to the present example embodiment includes a semiconductor laser that outputs continuous light on a predetermined wavelength. Excitation light output by the first excitation light source unit 44 is set as, for example, 0.98 µm. The first excitation light source unit 44 according to the present example embodiment splits light output from the semiconductor laser into two portions with the optical coupler, and outputs each portion to each of the first optical amplifiers 42. The semiconductor laser of the first excitation light source unit 44 operates based on electricity supplied, via the surge protection circuit 46, from a feed line inside an undersea cable connected to the undersea repeater 40.

The second excitation light source unit 45 generates excitation light for amplifying optical power of signal light in an L-band, and outputs the generated excitation light to each of the second optical amplifiers 43. The second excitation light source unit 45 includes a semiconductor laser, a control circuit that controls the semiconductor laser, and an optical coupler. The second excitation light source unit 45 according to the present example embodiment includes a semiconductor laser that outputs continuous light on a predetermined wavelength. The second excitation light source unit 45 according to the present example embodiment splits light output from the semiconductor laser into two portions with the optical coupler, and outputs each portion to each of the second optical amplifiers 43. The semiconductor laser of the second excitation light source unit 45 operates based on electricity supplied, via the surge protection circuit 46, from a feed line inside an undersea cable connected to the undersea repeater 40.

An operation of the undersea repeater 40 according to the present example embodiment is described. The semiconductor laser of the first excitation light source unit 44 of the undersea repeater 40 generates excitation light that amplifies optical power of signal light in a C-band, based on electricity supplied from an electricity line of an undersea cable via the surge protection circuit 46, and outputs the generated excitation light to the optical coupler. The optical coupler splits the input excitation light into two portions, and outputs each portion to each of the first optical amplifier 42-1 and the first optical amplifier 42-2. The first excitation light source unit 44 according to the present example embodiment splits in such a way that optical power of excitation light input to each of the first optical amplifiers 42 becomes equal.

The semiconductor laser of the second excitation light source unit 45 generates excitation light that amplifies optical power of signal light in an L-band, based on electricity supplied from an electricity line of an undersea cable via the surge protection circuit 46, and outputs the generated excitation light to the optical coupler. The optical coupler splits the input excitation light into two portions, and outputs each portion to each of the second optical amplifier 43-1 and the second optical amplifier 43-2. The second excitation light source unit 45 according to the present example embodiment splits the excitation light in such a way that optical power of excitation light input to each of the second optical amplifiers 43 becomes equal. When current supplied from the undersea cable is brought into a state of overcurrent, the surge protection circuit 46 cuts off current to the first excitation light source unit 44 and the second excitation light source unit 45.

Signal light input to the undersea repeater 40 via the undersea cable is input to each of the first optical amplifiers 42 or the second optical amplifiers 43 being associated with an optical fiber through which the signal light is transmitted.

When the signal light is input to each of the first optical amplifiers 42, optical power of the signal light in a C-band is amplified based on excitation light input from the first excitation light source unit 44. The signal light of which optical power is amplified is output to an optical fiber connected to each of the first optical amplifiers 42, and transmitted through the undersea cable.

When the signal light is input to each of the second optical amplifiers 43, optical power of the signal light in an L-band is amplified based on excitation light input from the second excitation light source unit 45. The signal light of which optical power is amplified is output to an optical fiber connected to each of the second optical amplifiers 43, and transmitted through the undersea cable.

The undersea repeater 40 according to the present example embodiment amplifies optical power of signal light in each of a C-band and an L-band in the optical amplifier being associated with each band. In addition to such a configuration, the undersea repeater 40 according to the present example embodiment may have a configuration that outputs excitation light from the first excitation light source unit 44 and the second excitation light source unit 45 to an optical amplifier amplifying optical power of signal light in a C+L-band, and performs amplification of the optical power.

When light sources being associated with excitation light on a plurality of wavelengths, and an optical amplifier are included as in the undersea repeater 40 according to the present example embodiment as well, downsizing and electric power saving of a device can be performed by using a common excitation light source for each wavelength.

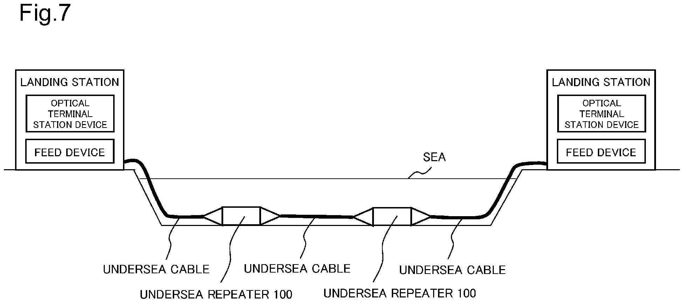

Fig. 7 illustrates an example of a configuration when the undersea repeater according to each of the first to fifth example embodiments is used for an undersea cable system as an undersea repeater 100. The undersea cable system in Fig. 7 includes a landing station, an undersea cable, and the undersea repeater 100. The landing station further includes an optical terminal station device, and a feed device. The undersea cable is constituted of an optical fiber for transmission of signal light, and a feed line that supplies electricity to the undersea repeater 100.

The optical terminal station device performs transmission and reception of signal light transmitted through an optical fiber inside an undersea cable. The optical terminal station device generates a multiplex signal, based on a signal received via a communication network on land, and transmits the multiplex signal to an opposite optical terminal station device via the undersea cable. The optical terminal station device transmits, to each communication network being a transmission destination, the multiplex signal received from the opposite optical terminal station device via the undersea cable. The feed device supplies electricity to the undersea repeater 100 via the feed line of the undersea cable. By being configured as in Fig. 7, the undersea repeater according to each of the first to fifth example embodiments can amplify optical power of signal light transmitted through an optical fiber in a state where electric power consumption is suppressed.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2018-148478, filed on August 7, 2018, the disclosure of which is incorporated herein in its entirety by reference.

### [Reference signs List]

- 1: Case
- 2: Optical amplification unit
- 3: Excitation light source unit
- 10: Undersea repeater
- 11: Case
- 12-1: Optical amplifier
- 12-2: Optical amplifier
- 12-3: Optical amplifier
- 12-4: Optical amplifier
- 13: Excitation light source unit
- 20: Undersea repeater
- 21: Case
- 22-1: Optical amplifier
- 22-2: Optical amplifier
- 22-3: Optical amplifier
- 22-4: Optical amplifier
- 23: Excitation light source unit
- 24: Surge protection circuit
- 30: Undersea repeater
- 31: Case
- 32-1: Optical amplifier
- 32-2: Optical amplifier
- 32-3: Optical amplifier
- 32-4: Optical amplifier
- 33: First excitation light source unit
- 34: Second excitation light source unit
- 35: Surge protection circuit
- 40: Undersea repeater
- 41: Case
- 42-1: First optical amplifier
- 42-2: First optical amplifier
- 43-1: Second optical amplifier
- 43-2: Second optical amplifier
- 44: First excitation light source unit
- 45: Second excitation light source unit
- 46: Surge protection circuit
- 100: Undersea repeater
- 200: Undersea repeater
- 201: Case
- 202: Optical amplifier
- 203: Excitation light source unit

## Claims

1. An undersea repeater comprising:
a case housing therein a plurality of subunits;
a plurality of optical amplification units each being included as the subunit and having an optical amplifier that amplifies, based on excitation light, optical power of input signal light and outputs the amplified light; and
an excitation light source unit that is included as the subunit, generates the excitation light, and outputs the split excitation light to each of the optical amplification units.

2. The undersea repeater according to claim 1, wherein the excitation light source unit includes a light source that outputs the excitation light, a control circuit that controls the light source, and a splitting element that splits the excitation light output from the light source.

3. The undersea repeater according to claim 1 or 2, further comprising:
as the optical amplification unit, a first optical amplification unit that amplifies optical power of signal light in a first wavelength band, and a second optical amplification unit that amplifies optical power of signal light in a second wavelength band differing from the first wavelength band; and
as the excitation light source unit, a first excitation light source unit that outputs excitation light amplifying optical power in the first wavelength band, and a second excitation light source unit that outputs excitation light amplifying optical power in the second wavelength band, wherein
the excitation light output from the first excitation light source unit is input to the first optical amplification unit, and
the excitation light output from the second excitation light source unit is input to the second optical amplification unit.

4. The undersea repeater according to any one of claims 1 to 3, further comprising a surge protection unit having a circuit that cuts off a surge, as the subunit near the excitation light source unit, wherein
electricity is supplied to the excitation light source unit via the surge protection unit.

5. An undersea cable system comprising:
the undersea repeater according to any one of claims 1 to 4; and
an undersea cable including a plurality of optical fibers and a feed line, wherein
signal light transmitted through the optical fiber of the undersea cable is input to each of the optical amplification units of the undersea repeater being associated with the optical fiber, and
the excitation light source unit of the undersea repeater operates based on electricity supplied via the feed line of the undersea cable.

6. An optical amplification method in an undersea repeater including, as subunits inside a case, a plurality of optical amplification units each having an optical amplifier, and an excitation light source unit that outputs excitation light, the optical amplification method comprising:
in the excitation light source unit, generating the excitation light, and outputting the split excitation light to each of the optical amplification units; and
in the optical amplifier of each of the optical amplification units, amplifying, based on the excitation light, optical power of input signal light and outputting the amplified light.

7. The optical amplification method according to claim 6, further comprising, in the excitation light source unit, splitting, in a splitting element, the excitation light output from a light source that operates under control by a control circuit, and outputting the split excitation light to each of the excitation light source units.

8. The optical amplification method according to claim 6 or 7, further comprising:
in a first excitation light source unit included as the excitation light source unit, splitting and outputting first excitation light that amplifies optical power in a first wavelength band;
in a second excitation light source unit included as the excitation light source unit, splitting and outputting second excitation light that amplifies optical power in a second wavelength band differing from the first wavelength band;
in a plurality of first optical amplification units included as the optical amplification unit, amplifying optical power of signal light in the first wavelength band, based on the first excitation light; and
in a plurality of second optical amplification units included as the optical amplification unit, amplifying optical power of signal light in the second wavelength band, based on the second excitation light.

9. The optical amplification method according to any one of claims 6 to 8, further comprising supplying electricity to each of the excitation light source units via a surge protection circuit included as the subunit near the excitation light source unit.

10. The optical amplification method according to any one of claims 6 to 9, wherein
signal light transmitted through a plurality of optical fibers of an undersea cable is input to the optical amplification unit being associated with each of the optical fibers, and
the excitation light source unit operates based on electricity supplied via a feed line of the undersea cable.
